## Europäisches Patentamt
## European Patent Office
## Office européen des brevets

(19)

(11) Publication number: **0 030 152**
**B1**

(12)

# EUROPEAN PATENT SPECIFICATION

(45) Date of publication of patent specification: **07.12.83**

(51) Int. Cl.³: **B 01 J 8/36, C 10 J 3/56, C 01 B 3/44, C 10 B 49/22**

(21) Application number: **80304313.2**

(22) Date of filing: **01.12.80**

(54) Apparatus for use in processing a substance in a fluidized bed and process using this apparatus.

(30) Priority: **29.11.79 GB 7941220**

(43) Date of publication of application:
**10.06.81 Bulletin 81/23**

(45) Publication of the grant of the patent:
**07.12.83 Bulletin 83/49**

(84) Designated Contracting States:
**AT BE DE FR GB IT LU NL**

(56) References cited:
**EP - A - 0 001 358**
**EP - A - 0 013 590**
**FR - A - 2 287 497**
**GB - A - 1 504 688**
**US - A - 2 538 235**
**US - A - 3 717 700**
**US - A - 3 870 480**
**US - A - 3 969 089**

(73) Proprietor: **Exxon Research and Engineering Company**
**P.O.Box 390 180 Park Avenue**
**Florham Park New Jersey 07932 (US)**

(72) Inventor: **Moss, Gerald**
**Trevose Sarajac Avenue East Challow**
**Wantage Oxfordshire (GB)**

(74) Representative: **Somers, Harold Arnold et al,**
**ESSO Engineering (Europe) Ltd. Patents &**
**Licences Apex Tower High Street**
**New Malden Surrey KT3 4DJ (GB)**

Courier Press, Leamington Spa, England.

# Apparatus for use in processing a substance in a fluidized bed and process using this apparatus

The present invention relates to apparatus for use in processing a substance in a fluidized bed.

Fluidized beds are widely used to effect chemical and/or catalytic and/or physical changes in substances. The fluidized bed material may be employed to heat or cool the substances and/or to react chemically with the substance.

FR - A - 2287497 describes an apparatus for treating coal to produce combustible gases, liquid coal distillation products and highpressure steam, comprising a first fluidized bed chamber for degassing and coking finely-divided coal, and a second fluidized bed chamber for burning the coke, the first and second chambers being contained in a single enclosure and communicating with each other via a transfer system in the enclosure which allows fluidized bed material to flow in a controlled manner between the chambers, steam generation pipes installed in the bed area of the second chamber, means for removing and purifying gas evolved in the reaction in the first chamber, and means for returning gas from the purifying means to the bed in the first chamber, and a discharge for gases from the second chamber wherein the transfer system comprises a vertical separating wall extending below the bed level in the chambers, a floor sloping downwardly in the downstream direction below and spaced from the wall to define a passage therebetween, and means for providing a vertically upwardly directed gas blast on the downstream side of the wall. Such apparatus operates to provide a fluidized bed in each bed chamber which is of substantially uniform composition so that the material transferred from one bed to the other bed has the composition of the material in the said one bed. Moreover, it is not possible with such apparatus to change the throughput of material in each bed without changing the residence time. A further drawback of such apparatus is that significant quantities of gas are required in the vertically upwardly directed gas blast used to transfer material from the bed to the other which thereby increases the operating cost of the apparatus and influences the composition of the gas produced from each fluidized bed.

There are many applications of fluidized bed processing in which it is desirable to achieve a relatively rapid throughput of fluidized bed material with a relatively long residence time of the substance being processed in the fluidized bed. These conflicting goals are achieved by the present invention which provides apparatus for use in processing a substance in a fluidized bed processing zone, the apparatus comprising a process vessel for containing a fluidized particles bed of the processing zone in a bed space up to a selected level, the process vessel having an entrance opening below the selected level defined by an underflow entrance weir and an exit opening below the selected level defined by an underflow exit weir, an entrance ramp defining the bottom of the entrance opening, the entrance ramp sloping downwardly from an upper end outside the process vessel and above the entrance opening to a lower end inside the process vessel, a first fluidizing fluid distributor capable of passing fluidizing fluid into the base of an entrance zone of the fluidized bed space adjoining the lower end of the entrance ramp at such a rate as to remove bed particles from the lower end of the entrance ramp by fluidization at least as fast as bed particles pass into the bed space from the entrance opening so that, during operation, there is substantially no accumulation of bed particles at the lower end of the entrance ramp, supply means for passing into the entrance zone of the bed the substance to be processed in the fluidized bed, a second fluidizing fluid distributor disposed substantially or approximately at the level of the upper end of the entrance ramp and extending from the entrance zone to an exit zone adjoining the exit opening, the second distributor being capable of operation to form a stratified fluidized bed part at least in the vicinity of the exit zone, there being provided an upright member in a vertical plane between the first and second distributors which extends from the level of the first distributor to the level of the second distributor.

The said upright member may be part of, or form, a step extending upwards from the first fluid distributor to the second fluid distributor.

The apparatus may comprise an additional vessel for receiving at one end region particles passing out of the process vessel via the said exit opening thereof, there being a fluidizing fluid distributor for passing a fluidizing fluid into the said one end region of the additional vessel to fluidize particles received therein in a fluidized bed space up to a selected level.

The additional vessel may communicate at another end with the entrance opening of the process vessel and with the upper end of the said entrance ramp protruding into the additional vessel at the said other end thereof so that particles fluidized in the additional vessel pass down the said entrance ramp and via the entrance opening into the process vessel.

The apparatus may comprise an exit ramp which defines the bottom of the exit opening of the process vessel, the exit ramp sloping downwardly from an upper end inside the process vessel to a lower end inside the additional vessel at said one end thereof, and wherein the additional vessel is provided with a first fluidizing fluid distributor capable of passing fluidizing fluid into the base of a receiving zone of a fluidized bed space adjoining the lower end of the exit ramp at such a rate as to remove particles from the lower end of the exit ramp by fluidization at least at the same rate as particles pass through the exit opening so that there is substantially no accumulation of particles at the lower end of the exit ramp, a second fluidizing fluid distributor disposed substantially at the level of the upper end of the exit ramp and extending from the edge of the receiving zone substantially to the upper end of the said entrance ramp, the second distributor being operable to fluidize particles in the additional vessel, optionally there being provided in the additional vessel an upright member in a vertical plane between the first and second distributors of the additional vessel and which extends substantially from the level of the first distributor substantially to the level of the second distributor. The said upright member in the additional vessel may be part of, or form, a step extending upwards from the first fluid distributor of the additional vessel to the second fluid distributor thereof.

During operation of the apparatus of the invention, the upper end of the exit ramp or the entrance ramp or the upper ends of both ramps will have substantially no fluidizing fluid passing upwardly above them, and accordingly, fluidized particles which pass to a position above the upper end of a respective ramp will have no upwardly-passing fluidizing fluid to maintain them in a fluidized suspended state (i.e. their upward aerodynamic drag in upwardly-passing fluidizing fluid will fall to zero or approximately zero), and as a result, they will fall under the action of their weight onto the upper end of the respective ramp. If the downward forces (e.g. those arising from the downward slope of the ramp) exceed the friction between particles thus received on the upper end of the ramp and between the particles and the ramp, the particles on the ramp will slide down the ramp into the entrance zone of the respective fluidized bed as particles are removed from the lower end of the ramp by the vigorous fluidization in the entrance zone of the fluidized bed. However, if friction inhibits such sliding, means may be provided to pass a transport gas into particles on the ramp, e.g. from holes or nozzles suitably disposed in the upper face of the ramp at appropriate positions thereof. The transport gas reduces friction between particles and between particles and the ramp by causing at least partial fluidization of the particles on the ramp, and thereby promotes the movement of particles down the ramp. The transport gas may be passed into the particles on the ramp with at least a component of velocity in the direction of the fluidized bed intended to receive the particles. The slope of the ramp may be no smaller than the angle of repose of the particles in order to enhance the tendency of particles to slide down the ramp.

Preferably, either the process vessel is at least partially received or incorporated in the additional vessel, or vice versa.

The apparatus may comprise at least one segregation baffle in the process vessel which extends downwardly from above the selected level to a level below the selected level but above the entrance and exit openings, the baffle at least partly surrounding the said entrance zone so as to segregate products leaving the top of the entrance zone of the bed space at the · selected level from products leaving the top of the bed space at the selected level at other parts of the bed space. In order to enhance the retention of the substance being processed in the fluidized process bed, the baffle may bound a greater area, in a horizontal plane, at the selected level with the wall having the entrance weir, than at lower levels.

To reduce solids entrainment from the bed, the process vessel may comprise an additional baffle extending perpendicular to the path of bed particles from the entrance opening to the exit opening of the process vessel bed, the additional baffle being at a location between the segregation baffle and the vessel wall having the exit weir, the additional baffle preferably extending downwardly from above the selected level to a level below the selected level but above the level of the entrance and exit openings.

There may be separating means for receiving fluids from the process vessel and at least partially separating entrained solids from said fluids, and means for returning at least some of the thus separated solids to a lower part of the entrance zone of the fluidized bed space.

Any such solids which are returned to the fluidized bed space may be returned in transport gas, if used, which is supplied to promote the downward movement of particles on the entrance ramp into the fluidized bed space.

The invention also provides a process for gasifying a fuel employing the apparatus as described above, the process comprising the steps of providing a bed of fluidized particles within the bed space up to the selected level, maintaining the bed in a fluidized condition by passing a gas into the bottom thereof, passing the fuel into the entrance zone of the process vessel, providing a source of oxygen within the bed space so that the fuel is gasified in a self-sustaining gasification reaction at a fuel gasification temperature, causing bed particles to pass into the fluidized bed via said entrance opening, causing bed particles to pass out of the fluidized bed via said exit opening and recovering fuel gasification products from above the selected level.

The particles passing into the fluidized bed via the entrance opening may comprise $CaSO_4$ which is substantially the sole or main source of oxygen for the gasification of the fuel and wherein the fluidizing fluid supplied to the fluidized bed is a gas which is substantially free of inert substances. The fluidizing fluid may comprise water vapour or steam, in amounts which are small in relation to the amounts normally employed for the steam gasification of carbonaceous fuel. The steam, if provided, is for the purpose of serving as a source of hydrogen which suppresses the liberation of sulfur moieties from $CaSO_4$ and CaS. Any steam gasification of carbon is preferably incidental to this purpose. The fluidizing fluid may be a portion of the fuel gasification products.

The process preferably comprises the steps of vigorously fluidizing the fluidized bed in the entrance zone above the first distributor, passing fuel into the entrance zone of the process vessel so that the fuel becomes well mixed with bed particles in the entrance zone, fluidizing the bed above the second distributor less vigorously whereby to form at least in the exit zone a top stratum of the bed which is rich in fuel material which has not been gasified, the top stratum being above the top of the exit opening whereby bed particles passing out of the exit opening are substantially free of fuel material.

Preferably, any entrained solids comprising fuel material are separated from gas and/or vapour fuel gasification products, and at least part of said separated solids is returned (e.g. employing the said transport gas, if the latter is used) to the entrance zone of the fluidized bed for gasification of fuel material thus returned.

Preferably, the fluidization conditions within the bed are such that fuel material is at least partly maintained in a top region of the bed above bed solids passing through the bed space from the entrance opening to the exit opening with intermixing of fuel material and bed solids in a part of the bed between the top of the bed and the bottom of the said top region thereof.

The invention is now further described with reference to an embodiment thereof, given by way of a non-limitative example, and with reference to the accompanying drawings in which:

Figure 1 is a diagrammatic vertical cross-sectional elevation of the principal parts of an apparatus for use in converting a hydrocarbonaceous and/or carbonaceous fuel to a combustible gas, and

Figure 2 is a horizontal cross-sectional plan view, taken in the plane A—A of Figure 1, of the apparatus, with some parts omitted.

It is to be understood that the apparatus is depicted schematically in the drawings.

The apparatus, generally indicated by reference 10, comprises a gasifier vessel 11 bounded by side walls 12 and 13 and end walls 14 and 15 in which a fuel is subjected to a gasification process in a bed 16 of fluidized solids. The solids of the fluidized bed 16 are fluidized by passing a fluidizing gas into the bottom of the bed 16 from suitable holes or nozzles 17 provided in the base of the vessel 11. The fluidizing gas is provided from a number of plena 18a, 18b beneath the base and which are in communication through ports (not shown) in the base with the holes or nozzles 17.

The bottom of the end wall 14 defines with the contiguous surface of the base an underflow entrance weir or port 19 for the entrance of solids to the bottom of the bed 16 at one end thereof. The base at the underflow entrance port 19, and also for some distance outside and inside the vessel 11 on each side of the port 19 has an inclined portion, which will be referred to as the entrance ramp 20, sloping downwardly into the vessel 11, and to the extent that the thickness of the end wall 14 permits, the bottom of the end wall forming the top of entrance port 19 is also downwardly inclined in the direction of the vessel 11. A conduit 21 extends through the ramp 20 and terminates at a nozzle 22 on the top surface of the ramp 20 within the vessel 11.

The bottom end of the entrance ramp 20 adjoins a lower base section 23 which is preferably substantially horizontal (as shown) and provided with nozzles 17 which receive fluidizing gas from plenum 18b.

The bottom of the end wall 15 at the other end of the bed 16 defines with the continuous surface of the base an underflow exit weir or port 24 for the exit of solids from the bottom of the bed 16. The base at the underflow exit port 24 and for some distance inside and outside the vessel 11 on each side of the exit port 24 has an inclined portion, which will be referred to as the exit ramp 25, sloping downwardly from a level within the vessel 11 substantially equal to the level of the top of the entrance ramp 20 down to a level substantially equal to that of the lower end of the entrance ramp 20 where it adjoins the lower base section 23. The bottom of the end wall 15 forming the top of the exit port 24 is also downwardly inclined in the same sense as the exit ramp 25 to the extent that the wall thickness permits. A conduit 26 extends through the ramp 25 and terminates at a nozzle 27 on the top surface of the ramp 25 outside the vessel 11.

An upper base section 28 extends preferably substantially horizontally (as shown) within the vessel 11 from the top end of the exit ramp 25 towards the walls 14, and a step 29 connects the contiguous ends of the lower base section 23 and the upper base section 28. The plenum 18a communicates through the upper base section 28 with the holes or nozzles 17 on the top surface thereof.

The bed 16 is arranged to have a top level 30 above the levels of the base sections 23 and 28 and the tops of the entrance and exit ports 19 and 24, and the fuel which is to be converted is passed into the vessel via one or more injection pipes 31 at such a level that the fuel is contacted by the fluidizing gas at least in the top layer of the bed 16.

For the conversion of hydrocarbonaceous fuel to combustible gas, relatively elevated temperatures are required, and the level at which the fuel is passed into the bed 16 will depend largely on the nature of the fuel, since in the case of liquid hydrocarbon fuels, injection at too high a level in the vessel 16 will reduce the contact time between bed solids and vapours and gases produced as a result of the contacting of hot bed solids and the fuel, and such vapours and gases may not be converted to the desired extent to the desired combustible gas products. In the case of solid fuels, the level of injection is less critical than with liquid fuels, and solid fuels may be dumped on the bed surface 30 in some instances, whereas liquid fuels will generally best be injected some distance below the surface 30 of the bed 16.

For operation of the apparatus as so far described, a fluidizing gas is supplied to plenum 18a and a fluidizing gas is supplied to plenum 18b to fluidize the bed solids in the bed 16. The rate of supply of fluidizing gas to the plenum 18b is such that the part of the fluidized bed 16 above the lower base section 23 and the nozzles 17 thereon is vigorously fluidized so that solids are removed from the lower end of the entrance ramp 20 by fluidization or a gas-lift effect, and circulated into the fluidized bed 16.

The removal of solids from the lower end of the entrance ramp 20 causes bed solids on the ramp 20 to move down the ramp via entrance port 19 and into the bed 16 under the action of the weight of bed solids higher up the ramp 20, provided friction does not prevent such movement.

The upper end of the exit ramp 25 extends into the interior space of the vessel 11 and substantially prevents fluidizing gas from the nozzles 17 of the upper base section 28 fluidizing the bed solids above the upper end of the exit ramp 25. As a result, bed solids passing above the exit ramp 25 collapse or slump onto the ramp 25, and the slumped bed solids slide down the ramp 25 and pass out of the bed 16 via the exit port 24, provided friction does not prevent such movement. If friction does prevent such movement, a suitable transport gas is passed intermittently or continuously through one or more conduits 26 to fluidize bed solids on the exit ramp 25, e.g. in the vicinity of the respective nozzles 27, so that the bed solids then pass down the exit ramp 25 and out of the fluidized bed 16 via exit port 24.

The slope of one or both of the ramps 20, 25 may be at least equal to, and preferably greater than, the angle of repose of the bed particles to promote downward movement of particles and the respective ramp. Within the bed 16, the gas from the plena 18a, 18b, causes fluidization of the bed solids which, in the usual way, will have relatively rapid vertical motion compared to their horizontal or lateral motion through the bed 16. The operation of the apparatus so far described ensures that the lateral motion of solids from the entrance port 19 to the exit port 24 can be regulated over a relatively wide range by regulating the rate of fluidizing gas from the nozzles 27 of the lower base section 23 and/or by regulating the transport gas rate. When the nature of the fuel and/or the manner in which it is introduced into the bed 16 is such that, under the fluidizing conditions in the bed 16, the fuel and products thereof tend to migrate to, and/or remain, in the top region of the bed 16 at least partially as a discrete stratum of fuel material, bed material may be passed into and removed from the bed 16 substantially without removing fuel material from the bed. For example, if the fuel is coal, its introduction into the top region of the bed 16 at coal gasification temperatures will cause the coal to devolatilize to give a coke of relatively low density which will form, at least in part, a relatively discrete stratum at the top region of the bed, particularly in the part of the bed 16 above the base section 28 where the fluidizing gas is injected into the bottom of the bed 16 at a relatively low rate, compared to the rate above the base section 23. The rate of gas injection from the nozzles 17 of base section 23 is preferably sufficiently high to cause substantially uniform mixing of the fuel and the bed solids so that they can interact chemically and/or physically relatively readily. The rate of gas injection from the nozzles 17 of the base section 28 is preferably lower so that, in the absence of any baffles promoting mixing, carbonaceous fuel solids would tend to separate into a fuel solids rich stratum at the top of the bed 16 above the base section 28. Such separation is not complete, even in the absence of baffles or other devices to promote mixing, and chemical and/or physical interaction between bed solids and fuel solids continues to take place at least in a zone just below the bed surface 16 as bed solids pass horizontally in the direction of the exit opening 24. As a result of such interaction, fuel solids tend to become consumed from the top stratum of the bed 16 above the upper base section 28. For a liquid hydrocarbonaceous fuel such as oil, residuum or tarry material, a similar effect can be obtained by providing in the bed particulate solids of such weight to aerodynamic drag ratios that the fluidizing gas at certain selected rates and temperatures maintains them at least partly as a discrete stratum at the top region of the bed, and injecting the liquid hydrocarbonaceous fuel into the top region so that the particulate solids are coated with the fuel and fuel products. In addition to interactions between the fluidizing gas and the fuel (e.g. partial oxidation of the fuel), there may also be interactions between the fuel and the bed solids (e.g. heat transfer and/or chemical reactions). Thus, if the bed solids contain a sulfur-fixing substance such as calcium oxide, the gasification of the fuel will be accompanied by sulfur-capture of sulfur from the fuel and the combustible fuel gas will be of relatively low sulfur content, provided that the fluidizations conditions are so arranged there is adequate contact between the bed solids and the fuel material.

In one process for which the apparatus so far described is particularly, but not exclusively, suitable, the bed solids are employed as oxygen-donors. For example, if the bed solids comprise an alkaline earth metal sulfate such as

$CaSO_4$, the fuel will be at least partially oxidized to combustible fuel gas by reducing the $CaSO_4$ to CaS. Such a reaction may be effected simultaneously with desulfurization of the fuel by providing a sulfur-fixing agent, e.g. CaO, in the bed 16 and ensuring that there is adequate contacting of the fuel material and the oxygen-donating solid. If the $CaSO_4$ (or other reducible oxygen-containing solid) is employed as the sole source of oxygen for the fuel conversion, the resulting fuel gas will be substantially free of inert diluent gases such as nitrogen (which are usually present as a result of the use of air as the source of oxygen for gasification). In a process of this type, the fluidizing gas provided from the plena 18a, 18b would preferably be free of inert gases, and a suitable fluidizing gas would be a portion of the gas product recovered from the top of the vessel 11, and if necessary, cooled and/or cleaned, before being recycled to the plena 18a, 18b. Steam may be added to the recycled gas to promote the oxidation reactions.

In a process in which the oxygen for gasification is furnished by a solid, the oxygen-content of the solids in the bed must be continually renewed for the process to proceed continuously. The oxidation of the reduced oxygen-donating solids is effected in an oxidizer vessel 40 which, as depicted, has similarities with the gasifier vessel 11 as so far described, and receives bed solids via an underflow weir or port, which is defined between the bottom of the wall 15 and the downsloping ramp 25, and which weir or port is in fact the exit port 24 of the gasifier vessel 11. The bed solids are circulated into the oxidizer in the manner described hereinabove: that is to say, vigorous fluidization at the lower end of the exit ramp 25 removes solids from the lower end of the exit ramp at least as quickly as solids accumulate on the exit ramp, and the solids on the exit ramp continuously or intermittently slide down the ramp and are subsequently removed by the vigorous fluidization. If friction inhibits adequately fast movement of solids down the exit ramp 25, the solids on the ramp may be at least partially fluidized to reduce the friction by passing transport gas via one or more conduits 26 and respective nozzles 27. The transport gas may be injected with a horizontal component of velocity to promote solids movement. The bed solids. form a bed 41 in vessel 40 whose surface 42 is at about the same level as the surface 30 of bed 16. The vessel 40 has a lower base 43 extending preferably horizontally away from the bottom of the ramp 25 at about the same level as the lower base section 23. Bed solids leave bed 41 of vessel 40 via an underflow weir or port which is, in fact, the entrance port 19 of the gasifier vessel 11. The passage of solids out of port 19 is effected by removing solids from the lower end of the entrance ramp 20 by relatively vigorous fluidization caused by gas rising upwardly at a relatively high rate from the nozzles

17 of base 23, and any friction inhibiting the downward movement of solids along the entrance ramp 20 may be reduced by fluidizing the solids by transport gas supplied via one or more conduits 21 to respective nozzles 22 in the surface of the entrance ramp 20. The transport gas may leave the nozzle(s) 22 with a horizontal component of velocity. An upper base section 44 extends in the vessel 40 at about the level of upper base section 28 from the top of the downsloping ramp 20 to a step 45 which connects the upper base section 44 and lower base section 43. The base sections 43 and 44 are provided with holes or nozzles which receive fluidizing fluid from respective plena 48a, 48b. When the vessel 40 is provided for performing a process in which the oxygen content of reduced oxygen-donating bed solids is renewed, the fluidizing fluid may be any suitable oxygen-containing gas, e.g. air, whereby in the case of CaS, the oxidation is performed under such conditions of temperature and pressure that the CaS is oxidized to $CaSO_4$ with substantially no conversion to other products. The oxidation of CaS to $CaSO_4$ is strongly exothermic, and the heat generated by the reaction may be employed to maintain the temperature of bed 16 at a fuel gasifying temperature. The hot oxygen-depleted air leaving bed 41 may be employed to heat (by heat exchange) the fresh air being passed via conduits 49 to plena 48a, 48b and to the bed 41.

The various plena 18a, 18b and 48a, 48b furnish gases to different depths of bed and are therefore supplied at appropriate pressures to provide the appropriate gas distribution rates in each part of the beds 16, 41.

If transport gas is supplied to the conduits 21, 26, its nature will depend on the process being performed in each vessel 11, 40. For fuel gasification performed as described in bed 16, it is preferred that the transport gas should not be inert so that the combustible fuel gas product is not diluted. Thus, transport gas supplied to conduit 21 may be steam and/or $CO_2$. However, as the amount of transport gas will be small in relation to the total amount of gas passing through bed 16, there may be circumstances in which a transport gas containing inert gas may be acceptable. In such circumstances, the transport gas may be air, flue gas (e.g. obtained from the combustion of the combustible fuel gas product), an inert gas such as nitrogen, or any mixture of the transport gases previously mentioned.

For the oxidation process $(CaS+2O_2 \rightarrow CaSO_4)$ performed in bed 41, any transport gas supplied to conduit 26 may conveniently be air, optionally diluted, e.g. with flue gas, to avoid excessive temperature rises in the vicinity of the nozzle(s) 27.

It will be appreciated that any blockage of the conduits 21, 26 may be relatively easily cleared by rodding out the conduits with a rigid rod.

In the apparatus as so far described, the circulation of bed material through each bed 16 and 41 in one sense enables the size of the entrance and exit ports 19 and 24 to be relatively large. Moreover, in the processing of a substance, such as a hydrocarbonaceous fuel or a suitable mineral passed or injected into the bed 16 relatively close to the wall 14, a horizontal concentration gradient of the substance is obtained with a relatively high concentration adjacent to the region at which the substance is introduced to the bed, and lower concentrations in regions closer to the wall 15 of the process vessel 11. The benefit of a horizontal concentration gradient of this type is that only a very small proportion (if any) of the substance will pass from bed 16 to bed 41 so that the desired processing of the substance will be effected on substantially all of the substance passed into bed 16. If the process is for the gasification of a hydrocarbonaceous fuel, it will be appreciated that any fuel material passing to bed 41 will not contribute to the production of combustible fuel gas produced in bed 16, and will, from that point of view, be wasted.

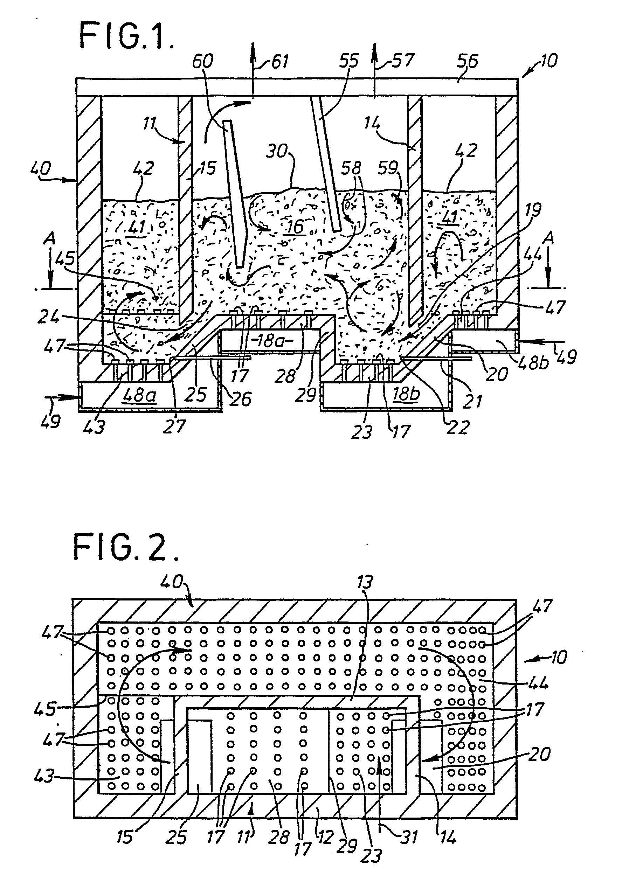

As will be seen from Figure 1, the process vessel 11 is partly divided by a partition 55 which extends downwardly from its contact with the top 56 of vessel 11 to a level below the surface 30 of the bed 16 but above the base of the vessel 11. When the substance to be processed in bed 16 produces gases and/or vapours during processing, and the vapours and/or gases are worth recovering for their value or some other reason (e.g. their toxicity), the substance is preferably passed into the bed 16 between the wall 14 and the partition 55 at such a level that vapours and/or gases rise into the freeboard space above bed 16 between wall 14 and partition 55 for recovery via a suitable conduit, designated 57. In the case of many hydrocarbonaceous fuels, the initial contact between the fuels and the high temperature bed material causes the flashing-off of hydrocarbon vapours and gases and hydrogen comprising a "rich" or high calorific value gas, the non-flashed part of the fuel remaining in the bed as a carbon-rich solid which is convertible and converted to combustible fuel gas downstream of the partition 55 (i.e. in the bed region between the partition 55 and the wall 15).

It will be seen that the partition 55 is inclined so as to be slightly convergent towards the end wall 14. This inclination reduces the amount of fluidizing gas which can pass upwardly adjacent to the right-hand (as shown) face of the partition 55 within the bed 16 so that solids become defluidized in the vicinity of the right-hand face and sink in the bed, some particles passing under the partition 55 to the relatively vigorously fluidized region on the left-hand face, as indicated by the arrows 58. The downflow of defluidized solids at the right-hand face of partition 55 promotes a corresponding upflow of bed solids in regions near the wall 14, as indicated by arrows 59 so that the substance being processed is exposed to bed solids which have risen from the vicinity of the entrance to the bed 16 so as to enhance the amount and rate of chemical reaction due to interactions between the substance (e.g. fuel substance) and the bed solids.

Between the partition 55 and the wall 13 is a baffle 60, the top of which is spaced from the top 56 of vessel 11, and the bottom of which extends into the bed 16 to a level somewhat below the bottom level of the partition 55. The baffle 60 is downwardly inclined away from the wall 15 so as to cause a downflow of defluidized solids at its immersed right-hand (as shown) face and an upflow of fluidized solids at its immersed left-hand (as shown) face. The latter upflow is useful in increasing the contact and thereby the interactions between the bed solids and the residue of the substance (e.g. fuel substance) being processed and also in reducing the amount of residual substance which passes out of the exit port 24. In the case of hydrocarbonaceous fuels undergoing gasification, the residual substance will very largely be carbon, and its gasification product will be oxides of carbon, preferably with carbon monoxide predominating if the operating conditions are appropriate. The gas product (e.g. combustible fuel gas from carbon gasification) is recovered from the freeboard space above the top of the bed 16 via a conduit 61 located between the partition 55 and the baffle 60.

The portion of the baffle 60 above the top surface 30 of bed 16 serves, to some extent, to reduce the entrainment of fine solids in the gas passing to the conduit 61.

In the processing of fuel substances to combustible fuel gas, it is preferred to regulate the fluidizing conditions within the bed 16 so that the fuel substance tends to form a discrete stratum at the top region of bed 16, the action of the immersed parts of the partition 55 and baffle 60 serving to promote intermixing and interaction of the bed solids and the fuel substance in the vicinity of the said immersed parts. However, the operating conditions should be such that the fuel substance does not tend to become well mixed with the bed solids, but rather to separate therefrom and migrate to the top region of the bed 16.

For compactness and heat conservation reasons, the vessel 11 is shown as being received or incorporated in the vessel 40, but other arrangements are also within the ambit of the invention — e.g. the vessel 40 may be received or incorporated on the vessel 11 if the relative sizes of the vessels permit this. The vessels 11 and 40 may, alternatively, be completely separated from each other and provided with suitable ducts for the transfer of bed solids from one vessel to the other.

Although the ramps 20 and 25 are both shown as terminating at their lower ends where they join the edges respective lower base sections 23 and 43, one or both of the ramps may terminate above the edge(s) of the lower base section(s), there being a wall part (not shown) extending upwardly from the edge(s) to the lower end of the respective ramp(s). The wall part may be either substantially vertical or somewhat inclined so that the bed space is upwardly divergent towards the lower end of the ramp.

When the apparatus of the invention is employed to process a hydrocarbonaceous fuel, there will usually be some entrainment of fuel solids with the gases leaving the process vessel 11 via lines 57 and 61 (in some instances, about 30% of the carbon content of a coal may be thus entrained). In addition, there will also usually be fine bed solids entrained in the gases. In order to recover at least some of the fuel solids for further processing, the gases are preferably passed through a solids separation device (e.g. a cyclone), and the solids thus recovered may be returned, at least in part, to the bed 16. In order to increase the residence time in the bed 16 of the thus returned solids for increased processing thereof, it is preferred to pass the returned solids into a bottom region of the bed 16. A convenient method of effecting this return of recovered solids is to entrain the recovered solids in a transport gas which is passed into the bed 16 e.g. via one or more of the conduits 21 so that the fuel solids (preferably still hot) mix with hot bed particles entering the bed 16 via the entrance port 19. In the instances where there is a wall part extending upwardly to the lower end of the entrance ramp 20 from the edge of the lower base section 23, the recovered fuel solids may be entrained for return to the bed 16 via one or more nozzles in the wall part.

The recovery of entrained solids from the gas products may be effected in at least two stages. In a first stage, relatively large particles (which will tend to be fuel rich) are recovered and may be returned to the bed 16 as described, at least in part. In a subsequent stage, relatively finer particles are recovered and these may be circulated to the bed 41 for oxidation of CaS to CaSO₄ to produce heat.

Although the apparatus of the invention has been described with particular reference to its use for converting hydrocarbonaceous liquid and/or solid fuels to fuel gases (which may also be suitable for chemical synthesis purposes), it will be appreciated that other substances, such as garbage or metal-containing ores or other minerals, may also be processed in the apparatus.

## Claims

1. Apparatus for use in processing a substance in a fluidized bed processing zone, the apparatus comprising a process vessel (11) for containing a fluidized particles bed (16) of the processing zone in a bed space up to a selected level (30), the process vessel (11) having an entrance opening (19) below the selected level (30) defined by an underflow entrance weir (in 14) and an exit opening (24) below the selected level (30) defined by an underflow exit weir (in 15), an entrance ramp (20) defining the bottom of the entrance opening (19), the entrance ramp (20) sloping downwardly from an upper end outside the process vessel (11) and above the entrance opening (19) to a lower end inside the process vessel (11), a first fluidizing fluid distributor (23, 17) capable of passing fluidizing fluid into the base of an entrance zone of the fluidized bed space (16) adjoining the lower end of the entrance ramp (20) at such a rate as to remove bed particles from the lower end of the entrance ramp (20) by fluidization at least as fast as bed particles pass into the bed space (16) from the entrance opening (19) so that, during operation, there is substantially no accumulation of bed particles at the lower end of the entrance ramp (20), supply means (31) for passing into the entrance zone of the bed (16) the substance to be processed in the fluidized bed (16), a second fluidizing fluid distributor (28, 17) disposed substantially or approximately at the level of the upper end of the entrance ramp (20) and extending from the entrance zone to an exit zone adjoining the exit opening (24), the second distributor being capable of operation to form a stratified fluidized bed part at least in the vicinity of the exit zone, there being provided an upright member (29) in a vertical plane between the first and second distributors (respectively 23, 17 and 28, 17) which extends from the level of the first distributor (23, 17) to the level of the second distributor (28, 17).

2. Apparatus as in claim 1 comprising an additional vessel (40) for receiving at one end region particles passing out of the process vessel (11) via the said exit opening (24) thereof, there being a fluidizing fluid distributor (43, 47) for passing a fluidizing fluid into the said one end region of the additional vessel (40) to fluidize particles received therein in a fluidized bed space (41) up to a selected level (42).

3. Apparatus as in claim 2 in which the additional vessel (40) communicates at another end with the entrance opening (19) of the process vessel (11) and with the upper end of the said entrance ramp (20) protruding into the additional vessel (40) at the said other end thereof so that particles fluidized in the additional vessel (40) pass down the said entrance ramp (20) and via the entrance opening (19) into the process vessel (11).

4. Apparatus as in claim 2 or claim 3 comprising an exit ramp (25) which defines the bottom of the exit opening (24) of the process vessel, the exit ramp (25) sloping downwardly from an upper end inside the process vessel (11) to a lower end inside the additional vessel (40) at said one end thereof, and wherein the additional vessel (40) is provided with a first fluidizing fluid distributor (43, 47) capable of passing fluidizing fluid into the base of a receiving zone of a fluidized bed space (41) adjoining the lower end of the exit ramp (25) at such a rate as to remove particles from the lower end of the exit ramp (25) by fluidization at least at the same rate as particles pass through the exit opening (24) so that there is substantially no accumulation of particles at the lower end of the exit ramp (25), a second fluidizing fluid distributor (44, 47) disposed substantially at the level of the upper end of the exit ramp (25) and extending from the edge of the receiving zone substantially to the upper end of the said entrance ramp (20), the second distributor (44, 47) being operable to fluidize particles in the additional vessel (40), optionally there being provided in the additional vessel (40) an upright member (45) in a vertical plane between the first and second distributors (respectively 43, 47 and 44, 47) of the additional vessel (40) which extends substantially from the level of the first distributor (43, 47) substantially to the level of the second distributor (44, 47).

5. Apparatus as in any one of claims 1 to 4 comprising at least one baffle (55) in the process vessel (11) extending downwardly from above the selected level (30) to a level below the selected level (30) but above the entrance and exit openings (respectively 19 and 24), the baffle (55) at least partly surrounding the said entrance zone so as to segregate products leaving the top of the entrance zone of the bed space (16) at the selected level (30) from products leaving the top of the bed space (30) at the selected level (30) at other parts of the bed space (30).

6. Apparatus as in any one of claims 1 to 5 comprising means for receiving fluids from the process vessel (11) and at least partially separating entrained solids from said fluids, and means (21, 22) for returning at least some of the thus separated solids to a lower part of the entrance zone of the fluidized bed space (16).

7. A process for gasifying a fuel employing apparatus in accordance with any one of claims 1 to 6 comprising the steps of providing a bed of fluidized particles within the bed space (16) up to the selected level (30), maintaining the bed in a fluidized condition by passing a gas into the bottom thereof (via 17), passing the fuel (via 31) into the entrance zone of the process vessel (11), providing a source of oxygen within the bed so that the fuel is gasified in a self-sustaining gasification reaction at a fuel gasification temperature, causing bed particles to pass into the fluidized bed via said entrance opening (20), causing bed particles to pass out of the fluidized bed via said exit opening (24), and recovering fuel gasification products (e.g. in 57 and 61) from above the selected level (30).

8. A process as in claim 7 characterized in that the particles passing into the fluidized bed via the entrance opening (20) comprise $CaSO_4$ as substantially the sole or main source of oxygen for the gasification of the fuel and wherein the fluidizing fluid supplied to the fluidized bed is a gas which is substantially free of inert substances.

9. A process as in claim 7 or claim 8 comprising the steps of vigorously fluidizing the fluidized bed in the entrance zone above the first distributor (23), passing fuel into the entrance zone of the process vessel so that the fuel becomes well mixed with bed particles in the entrance zone, fluidizing the bed above the second distributor (28) less vigorously whereby to form at least in the exit zone a top stratum of the bed which is rich in fuel material which has not been gasified, the top stratum being above the top of the exit opening (24) whereby bed particles passing out of the exit opening are substantially free of fuel material.

10. A process as in any one of claims 1 to 9 in which entrained solids comprising fuel material are separated from gas and/or vapour fuel gasification products, and at least part of said separated solids is returned to the entrance zone of the fluidized bed (via 21, 22) for gasification of fuel material thus returned.

**Patentansprüche**

1. Vorrichtung zur Verwendung bei der Behandlung einer Substanz in der Behandlungszone eines Wirbelbettes, bestehend aus einem Behandlungsbehälter (11) zum Enthalten eines fluidisierten Teilchenbettes (16) der Behandlungszone in einem Bettraum bis zu einem gewählten Niveau (30), wobei der Behandlungsbehälter (11) unterhalb des gewählten Niveaus (30) eine von einem Unterströmungs-Eintrittswehr (in 14) gebildete Eintrittsöffnung (19) und unterhalb des gewählten Niveaus (30) eine von einem Unterströmungs-Austrittswehr (in 15) gebildete Austrittsöffnung (24), eine den Boden der Eintrittsöffnung (19) bildende Eintrittsrampe (20), die von einem oberen Ende außerhalb des Behandlungsbehälters (11) und oberhalb der Eintrittsöffnung (19) zu einem tiefergelegenen Ende innerhalb des Behandlungsbehälters (11) abfällt, einen ersten Fluidisierungsfluidverteiler (23, 17) durch den Fluidisierungsfluid in die Basis einer Eintrittszone des Wirbelbettraumes (16), die an das untere Ende der Eintrittsrampe (20) anschließt, mit einer solchen Zufuhrrate führbar ist, daß Teilchen des Bettes von dem unteren Ende der Eintrittsrampe (20) durch Fluidisierung mindestens so schnell entfernt werden, wie Teilchen von der Eintrittsöffnung (19) in den Bettraum (16) geführt werden, sodaß im Betrieb im wesentlichen keine Ansammlung von Teilchen des Bettes am unteren Ende der Eintrittsrampe (20) auftritt, eine Zufuhreinrichtung (31) zum Führen der in dem fluidisierten Bett (16) zu behandelnden Substanz in die Eintrittszone des Bettes, sowie einen zweiten Fluidisierungsfluidverteiler (28, 17) besitzt, der im wesentlichen oder ungefähr auf dem Niveau des oberen Endes der Eintrittsrampe (20) angeordnet ist, sich von der Eintrittszone zu einer an die Austrittsöffnung (24) anschließenden Austrittszone erstreckt und so betreibbar ist, daß mindestens in der Nähe der Austrittszone ein schichtförmiger Wirbelbetteil gebildet wird, wobei in einer vertikalen Ebene zwischen dem ersten und zweiten Verteiler (23, 17 bzw. 28, 17) ein aufrechter Bauteil (29) vorgesehen ist, der sich vom Niveau des ersten Verteilers (23, 17) zum Niveau des zweiten Verteilers (28, 17) erstreckt.

2. Vorrichtung nach Anspruch 1, enthaltend einen zusätzlichen Behälter (40) zur Aufnahme von aus dem Behandlungsbehälter (11) durch dessen genannte Austrittsöffnung (24) austretenden Teilchen in einen Endbereich, wobei ein Fluidisierungsfluidverteiler (43, 47) zum Führen eines Fluidisierungsfluids in diesen einen Endbereich des zusätzlichen Behälters (40) zwecks Fluidisierung von darin aufgenommenen Teilchen in einem Wirbelbettraum (41) bis zu einem gewählten Niveau (42) vorgesehen ist.

3. Vorrichtung nach Anspruch 2, bei welcher der zusätzliche Behälter (40) an einem anderen Ende mit der Eintrittsöffnung (19) des Behandlungsbehälters (11) und mit dem oberen Ende der genannten Eintrittsrampe (20) in Verbindung steht, die in den zusätzlichen Behälter (40) an dem genannten anderen Ende desselben hineinragt, so daß in dem zusätzlichen Behälter (40) fluidisierte Teilchen entlang der Eintrittsrampe (20) und durch die Eintrittsöffnung (19) in den Behandlungsbehälter (11) gelangen.

4. Vorrichtung nach Anspruch 2 oder 3, welche eine den Boden der Austrittsöffnung (24) des Behandlungsbehälters bildende Austrittsrampe (25) besitzt, die von einem oberen Ende innerhalb des Behandlungsbehälters (11) zu einem tiefergelegenen Ende innerhalb des zusätzlichen Behälters (40) an dem genannten Ende desselben abfällt, und bei welcher der zusätzliche Behälter (40) mit einem ersten Fluidisierungsfluidverteiler (43, 47) versehen ist, durch den Fluidisierungsfluid in die Basis einer Aufnahmezone eines Wirbelbettraumes (41), der an das untere Ende der Austrittsrampe (25) anschließt, mit einer solchen Zufuhrrate führbar ist, daß Teilchen von dem unteren Ende der Austrittsrampe (25) durch Fluidisierung mindestens mit der selben Geschwindigkeit entfernt werden, wie Teilchen durch die Austrittsöffnung (24) geführt werden, sodaß im wesentlichen keine Ansammlung von Teilchen am unteren Ende der Austrittsrampe (25) auftritt, und mit einem zweiten Fluidisierungsfluidverteiler (44, 47), der im wesentlichen auf dem Niveau des oberen Endes der Austrittsrampe (25) angeordnet ist, und sich von dem Rand der Aufnahmezone im wesentlichen zu dem oberen Ende der genannten Eintrittsrampe (20) erstreckt, wobei der zweite Verteiler so betreibbar ist, daß Teilchen in dem zusätzlichen Behälter (40) fluidisiert werden, und wobei gegebenenfalls in dem zusätzlichen Behälter (40) in einer vertikalen Ebene zwischen dem ersten und zweiten Verteiler (43, 47 bzw. 44, 47) des zusätzlichen Behälters (40) ein aufrechter Bauteil (45) vorgesehen ist, der sich im wesentlichen von dem Niveau des ersten Verteilers (43, 47) im wesentlichen zum Niveau des zweiten Verteilers (44, 47) erstreckt.

5. Vorrichtung nach irgendeinem der Ansprüche 1 bis 4, mit mindestens einem Prallelement (55) in dem Behandlungsbehälter (11), welches sich von oberhalb des gewählten Niveaus (30) zu einem Niveau unterhalb des gewählten Niveaus (30), jedoch oberhalb der Eintritts- und der Austrittsöffnung (19 bzw. 24) nach unten erstreckt, wobei das Prallelement (55) zumindest teilweise die genannte Eintrittszone umgibt, um das obere Ende der Eintrittszone des Bettraumes (16) auf dem gewählten Niveau verlassende Teilchen von das obere Ende des Bettraumes (30) auf dem gewählten Niveau anderen Teilen des Bettraumes (30) verlassenden Produkten abzusondern.

6. Vorrichtung nach irgendeinem der Ansprüche 1 bis 5, mit einer Einrichtung zur Aufnahme von Fluids aus dem Behandlungsbehälter (11) und zum zumindest teilweisen Abtrennen von mitgerissenen Feststoffen von den genannten Fluids, und mit einer Einrichtung (21, 22) zum Rückführen von zumindest einigen der so abgetrennten Feststoffe in einen unteren Teil der Eintrittszone des Wirbelbettraumes (16).

7. Verfahren zum Vergasen eines Brennstoffes unter Verwendung der Vorrichtung nach irgendeinem der Ansprüche 1 bis 6, enthaltend die Schritte: Vorsehen eines fluidisierten Teilchenbettes innerhalb des Bettraumes (16) bis hinauf zu dem gewählten Niveau (30), Aufrechterhalten des Bettes in einem Fluidisierungszustand, indem ein Gas in den Boden desselben (durch 17) eingeführt wird, Einführen des Brennstoffes (durch 31) in die Eintrittszone des Behandlungsbehälters (11), Vorsehen einer Sauerstoffquelle innerhalb des Bettes, sodaß der Brennstoff in einer von selbst ablaufender Vergasungsreaktion bei einer Brennstoffvergasungstemperatur vergast wird, Bewirken, daß Betteilchen durch die Eintrittsöffnung (20) in das Wirbelbett eintreten, Bewirken, daß Betteilchen durch die Austrittsöffnung (24) aus dem Wirbelbett austreten, und Auffangen von Brennstoffvergasungsprodukten (z.B. bei 57 und 61) von oberhalb des gewählten Niveaus (30).

8. Verfahren nach Anspruch 7, dadurch gekennzeichnet, daß die durch die Eintrittsöffnung (20) in das Wirbelbett eintretenden Teilchen $CaSO_4$ als im wesentlichen die einzige und hauptsächliche Sauerstoffquelle für die Vergasung des Brennstoffes enthalten, und daß das dem Wirbelbett zugeführte Fluidisierungsfluid ein im wesentlichen von inerten Substanzen freies Gas ist.

9. Verfahren nach Anspruch 7 oder 8, enthaltend die Schritte: heftiges Fluidisieren des Wirbelbettes in der Eintrittszone oberhalb des ersten Verteilers (23), Einführen von Brennstoff in die Eintrittszone des Behandlungsbehälters, sodaß der Brennstoff mit 8 Betteilchen in der Eintrittszone gut vermischt wird, weniger heftiges Fluidisieren des Bettes oberhalb des zweiten Verteilers (28), um dadurch zumindest in der Austrittszone eine Deckschicht des Bettes zu biden, die reich an noch nicht vergastem Brennstoffmaterial ist, wobei die Deckschicht sich über dem oberen Ende der Austrittsöffnung (24) befindet, wodurch aus der Austrittsöffnung austretende Teilchen im wesentlichen frei von Brennstoffmaterial sind.

10. Verfahren nach irgendeinem der Ansprüche 1 bis 9, bei welchem mitgerissene Feststoffe, die Brennstoffmaterial enthalten, von Gas- und bzw. oder Dampfprodukten der Brennstoffvergasung getrennt werden und mindestens ein Teil der abgetrennten Feststoffe zur Eintrittszone des Wirbelbettes (durch 21, 22) rückgeführt wird, um das so rückgeführt Brennstoffmaterial zu vergasen.

## Revendications

1. Appareil à utiliser dans le traitement d'une substance dans une zone de traitement à lit fluidisé, l'appareil comprenant un récipient (11) de traitement destiné à contenir un lit (16) de particules fluidisées de la zone de traitement dans un espace, pour le lit, s'élevant jusqu'à un niveau choisi (30), le récipient (11) de traitement présentant une ouverture d'entrée (19) au-dessous du niveau choisi (30) défini par un déversoir d'entrée de sous-écoulement (en 14) et une ouverture de sortie (24) au-dessous du niveau choisi (30) défini par un déversoir de sortie de sous-écoulement (en 15), une rampe d'entrée (20) définis-dsant le fond de l'ouverture d'entrée (19), la rampe d'entrée (20) étant inclinée vers le bas à partir d'une extrémité supérieure, extérieure au récipient (11) de traitement et au-dessus de l'ouverture d'entrée (19), jusqu'à une extrémité inférieure, intérieure au récipient (11) de traitement, un premier distributeur (23, 17) de fluide de fluidisation capable d'introduire un fluide de fluidisation dans la base d'une zone d'entrée de l'espace (16) pour lit fluidisé, adjacent à l'extrémité inférieure de la rampe d'entrée (20), à un débit tel que des particules du lit sont retirées de l'extrémité inférieure de la rampe d'entrée (20) par fluidisation, au moins aussi rapidement que des particules du lit pénètrent dans l'espace (16) du lit, à partir de l'ouverture d'entrée (19), de manière que, pendant le fonctionnement, il n'y ait pratiquement pas d'accumulation de particules du lit à l'extrémité inférieure de la rampe d'entrée (20), des moyens (31) d'alimentation destinés à introduire dans la zone d'entrée du lit (16) la substance à traiter dans le lit fluidisé (16), un deuxième distributeur (28, 17) de fluide de fluidisation disposé sensiblement ou approximativement au niveau de l'extrémité supérieure de la rampe d'entrée (20) et s'étendant de la zone d'entrée jusqu'à une zone de sortie adjacente à l'ouverture de sortie (24), le deuxième distributeur étant capable de fonctionner pour former une partie de lit fluidisé stratifié au moins à proximité de la zone de sortie, un élément montant (29) étant prévu dans un plan vertical entre les premier et deuxième distributeurs (respectivement 23, 17 et 28, 17) et s'étendant du niveau du premier distributeur (23, 17) jusqu'au niveau du deuxième distributeur (28, 17).

2. Appareil selon la revendication 1, comprenant un récipient supplémentaire (40) destiné à recevoir, à une première région extrême, des particules sortant du récipient (11) de traitement par son ouverture de sortie (24), un distributeur (43, 47) de fluide de fluidisation étant destiné à introduire un fluide de fluidisation dans ladite première région extrême du récipient supplémentaire (40) pour fluidiser les particules qu'il reçoit dans un espace (41) pour lit fluidisé, jusqu'à un niveau choisi (42).

3. Appareil selon la revendication 2, dans lequel le récipient supplémentaire (40) communique par une autre extrémité avec l'ouverture d'entrée (19) du récipient (11) de traitement, l'extrémité supérieure de ladite rampe d'entrée (20) dépassant dans le récipient supplémentaire (40), à son autre extrémité, afin que des particules fluidisées dans le récipient supplémentaire (40) descendent le long de ladite rampe d'entrée (20) et pénètrent par l'ouverture d'entrée (19) dans le récipient (11) de traitement.

4. Appareil selon la revendication 2 ou la revendication 3, comprenant une rampe du sortie (25) qui définit le fond de l'ouverture de sortie (24) du récipient de traitement, la rampe de sortie (25) descendant d'une extrémité supérieure, située à l'intérieur du récipient (11) de traitement, jusqu'à une extrémité inférieure située à l'intérieur du récipient supplémentaire (40), à sa première extrémité, et dans lequel le récipient supplémentaire (40) est équipé d'un premier distributeur (43, 47) de fluide de fluidisation pouvant introduire un fluide de fluidisation dans la base d'une zone de réception d'un espace (41) pour lit fluidisé adjacent à l'extrémité inférieure de la rampe de sortie (25), à un débit tel que des particules sont retirées de l'extrémité inférieure de la rampe (25) de sortie par fluidisation au moins à la même vitesse que celle à laquelle des particules passent par l'ouverture (24) de sortie de manière qu'il n'y ait pratiquement aucune accumulation de particules à l'extrémité inférieure de la rampe (25) de sortie, un deuxième distributeur (44, 47) de fluide de fluidisation étant disposé sensiblement au niveau de l'extrémité supérieure de la rampe (25) de sortie et s'étendant du bord de la zone de réception sensiblement jusqu'à l'extrémité supérieure de ladite rampe d'entrée (20), le deuxième distributeur (44, 47) pouvant être mis en oeuvre pour fluidiser des particules dans le récipient supplémentaire (40), un élément montant (45) pouvant être prévu facultativement dans le récipient supplémentaire (40), dans un plan vertical, entre les premier et deuxième distributeurs (respectivement 44, 47) et (44, 47) du récipient supplémentaire (40), et s'étendant sensiblement du niveau du premier distributeur (43, 47) sensiblement jusqu'au niveau du deuxième distributeur (44, 47).

5. Appareil selon l'une quelconque des revendications 1 à 4, comprenant au moins une chicane (55) située dans le récipient (11) de traitement, s'étendant vers le bas à partir du dessus du niveau choisi (30) jusqu'à un niveau au-dessous du niveau choisi (30), mais au-dessus des ouvertures d'entrée et de sortie (respectivement 19 et 24), la chicane (55) entourant au moins partiellement ladite zone d'entrée afin de séparer des produits sortant du sommet de la zone d'entrée de l'espace (16) du lit, au niveau choisi (30), de produits sortant du sommet de l'espace (30) du lit au niveau choisi (30), dans d'autres parties de l'espace (30) du lit.

6. Appareil selon l'une quelconque des revendications 1 à 5, comprenant des moyens destinés à recevoir des fluides du récipient (11) de traitement et à séparer au moins partiellement des solides entraînés desdits fluides, et des moyens (21, 22) destinés à renvoyer au moins certains des solides ainsi séparés vers une partie inférieure de la zone d'entrée de l'espace (16) du lit fluidisé.

7. Procédé de gazéification d'un combustible, utilisant un appareil selon l'une quelconque des revendications 1 à 6, comprenant les étapes qui consistent à produire un lit de particules fluidisées dans l'espace (16) du lit, jusqu'au niveau choisi (30), à maintenir le lit dans un état fluidisé en introduisant un gaz dans son fond (par 17), à introduire le combustible (par 31) dans la zone d'entrée du récipient (11) de traitement, à prévoir une source d'oxygène à l'intérieur du lit afin que le combustible soit gazéifié en une réaction de gazéification auto-entretenue, à une température de gazéification du combustible, à faire passer des particules du lit dans le lit fluidisé par l'intermédiaire de ladite ouverture d'entrée (20), à faire sortir des particules du lit fluidisé par l'intermédiaire de ladite ouverture de sortie (24), et à recueillir des produits de gazéification du combustible (par exemple dans 57 et 61) à partir du dessus du niveau choisi (30).

8. Procédé selon la revendication 7, caractérisé en ce que les particules pénétrant dans le lit fluidisé par l'intermédiaire de l'ouverture d'entrée (20) comprennent du $CaSO_4$ constituant sensiblement la seule ou la principale source d'oxygène pour la gazéification du combustible, et dans lequel le fluide de fluidisation fourni au lit fluidisé est un gaz qui ne contient pratiquement pas de substances inertes.

9. Procédé selon la revendication 7 ou la revendication 8, comprenant les étapes qui consistent à fluidiser vigoureusement le lit fluidisé dans la zone d'entrée au-dessus du premier distributeur (23), à introduire du combustible dans la zone d'entrée du récipient de traitement afin que le combustible se mélange bien avec les particules du lit dans la zone d'entrée, à fluidiser le lit au-dessus du second distributeur (28) moins vigoureusement afin de former au moins dans la zone de sortie une couche supérieure du lit qui est riche en matière combustible n'ayant pas été gazéifiée, la couche supérieure étant au-dessus du haut de l'ouverture (24) de sortie de manière que des particules du lit sortant par l'ouverture de sortie ne comprennent pratiquement pas de matière combustible.

10. Procédé selon l'une quelconque des revendications 1 à 9, dans lequel les solides entraînés comprenant de la matière combustible sont séparés du gaz et/ou des produits de gazéification du combustible à l'état de vapeur, et au moins une partie desdits solides séparés est renvoyée vers la zone d'entrée du lit fluidisé (par 21, 22) pour gazéification de matière combustible ainsi renvoyée.

# FIG.1.

# FIG.2.